# EUROPEAN PATENT SPECIFICATION

(11) **EP 3 593 346 B1**
(45) Date of publication and mention of the grant of the patent: **10.01.2024**
(21) Application number: 18733766.2
(22) Date of filing: 05.06.2018
(51) Int. Cl.: G10L 15/22, G06F 16/00

(54) **GRAPHICAL DATA SELECTION AND PRESENTATION OF DIGITAL CONTENT**
GRAFISCHE DATENAUSWAHL UND DARSTELLUNG VON DIGITALEN INHALTEN
SÉLECTION DE DONNÉES GRAPHIQUES ET PRÉSENTATION DE CONTENU NUMÉRIQUE

(30) Priority: 29.08.2017 US 201715689864
(43) Date of publication of application: 15.01.2020
(73) Proprietor: Google LLC, Mountain View, CA 94043 (US)
(72) Inventor: SABUR, Zaheed, 8002 Zurich (CH); ZUMBRUNNEN, Adrian, 8002 Zurich (CH); VAN SCHELTINGA, Andrea Terwisscha, 8002 Zurich (CH); REUTOV, Mikhail, 8002 Zurich (CH); MIRELMANN, Lucas, 8002 Zurich (CH)
(74) Representative: Shipp, Nicholas
(86) International application number: PCT/US2018/035949
(87) International publication number: WO 2019/045816

(56) References cited:
- WO-A1-2012/018658
- WO-A1-2013/155619
- US-A1- 2014 108 453
- US-A1- 2015 340 033
- US-A1- 2016 005 395
- US-A1- 2017 242 860

## Description

### FIELD

The present specification relates to interaction between a user and a virtual assistant.

### BACKGROUND

Computing systems may be configured to receive multiple voice queries and to generate reply content that is responsive to each of the voice queries. The generated reply content can be provided for output to a user in an audio data format, a visual data format, or both. For example, computing systems can receive respective voice queries in which a user seeks to obtain information about a particular media/content item, meeting location, or subject matter that relates to a variety of conversational topics. Users that provide voice queries to an example client/computing device may desire to receive at least a subset of reply content in a particular data format that provides for a more convenient user experience.

US2015/340033 A1 discloses features for processing and interpreting natural language, such as interpretations of user utterances, in multi-turn dialog interactions. Context information regarding interpretations of user utterances and system responses to the user utterances can be maintained. Subsequent user utterances can be interpreted using the context information, rather than being interpreted without context. In some cases, interpretations of subsequent user utterances can be merged with interpretations of prior user utterances using a rule-based framework. Rules may be defined to determine which interpretations may be merged and under what circumstances they may be merged.

US2016/005395 A1 discloses conversational interactions between humans and computer systems can be provided by a computer system that classifies an input by conversation type, and provides human authored responses for conversation types. The input classification can be performed using trained binary classifiers. Training can be performed by labeling inputs as either positive or negative examples of a conversation type. Conversational responses can be authored by the same individuals that label the inputs used in training the classifiers. In some cases, the process of training classifiers can result in a suggestion of a new conversation type, for which human authors can label inputs for a new classifier and write content for responses for that new conversation type.

WO 2013/155619 A1 discloses a method, system, and computer program product which provide a conversation agent to process natural language queries expressed by a user and perform commands according to the derived intention of the user. A natural language processing (NLP) engine derives intent using conditional random fields to identify a domain and at least one task embodied in the query. The NLP may further identify one or more subdomains, and one or more entities related to the identified command. A template system creates a data structure for information relevant to the derived intent and passes a template to a services manager for interfacing with one or more services capable of accomplishing the task. A dialogue manager may elicit more entities from the user if required by the services manager and otherwise engage in conversation with the user. In one embodiment, the conversational agent allows a user to engage in multiple conversations simultaneously.

US2014/108453 discloses a system and method of processing a search request. Identification of a desired content item is based on comparing a topic of the search request to previous user input. The method includes providing access to a set of content items with metadata that describes the corresponding content items and providing information about previous searches. The method further includes receiving a present input from the user and determining a relatedness measure between the information about the previous searches and an element of the present input. If the relatedness measure is high, the method also includes selecting a subset of content items based on comparing the present input and information about the previous searches with the metadata that describes the subset of content items. Otherwise, the method includes selecting a subset of content items based on comparing the present input with the metadata that describes the subset of content items.

### SUMMARY

The present invention is set out in the independent claims, with some optional features set out in the claims dependent thereto.

The described subject matter enables effective continuous interaction between a user and a virtual assistant implemented on a computing device. In particular, by identifying whether a follow on voice query corresponds to a particular (e.g., initial) topic, is a temporary deviation from the particular topic or is completely unrelated to the particular topic and then, based on the identification, selecting an appropriate template, it is possible to provide an interface which efficiently groups associated information together. By grouping together information associated with a particular topic and separating out responses to queries which deviate from the particular topic, the described subject matter makes it possible for information to be presented to a user in a proactive manner which enables the user to more efficiently perform tasks using the presented information.

The subject matter described in this specification can be implemented in particular implementations and can result in one or more of the following advantages. A computing system includes a virtual assistant that is accessible using a client device and a display that is coupled to the client device. An operational mode of the system allows for voice-enabled dialogue between a user and the virtual assistant, along with accompanying visuals which are generated in response to voice input from the user.

The visuals provide graphical information that includes responses to voice queries from the user. The voice queries are received by the system and the visuals are presented at the client device using the display. Graphical information included in the visuals are parseable by voice commands from the user. These commands can be received by the system over a variety of distance ranges, e.g., a "mid-distance" range of 5-7 feet away. Visual information that is parseable by voice input provides for a more convenient and user-friendly virtual assistant experience, particularly when some users are busy with other tasks (e.g., cooking, driving, etc.) and cannot provide touch input to the client device.

Further, this operational mode of a virtual assistant enables convenient functionality when a user is engaged in another task that keeps their hands busy and/or perhaps a task that also consumes some of the user's visual focus. Visual outputs presented at a display of the client device can be sufficiently sized such that graphical information in the outputs is glanceable from a distance of, for example, 1-10 feet. Hence, users can continue electronic conversations with a virtual assistant over a range of distances without having to tapping on a display screen.

Use of the described teachings enables a computing system to realize improvements in computing efficiency and processor utilization. For example, receiving voice inputs and providing visuals that are responsive to the voice inputs allow users to interact effectively with a virtual assistant so that the system avoids having to perform redundant processing of voice inputs and tactile/touch inputs. Hence, a reduction in the amount of input parameters that are processed provides for improvements in computing efficiency, reduces processor utilization, and improves the overall operation of the computer system itself.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates multiple visual flows that are generated for output using an example computing system.
FIG. 2 illustrates a system diagram of an example computing system for generating the multiple visual flows of FIG. 1.
FIG. 3 is a flow diagram of an example process for populating an interest feed.
FIG. 4 is a block diagram of a computing system that can be used in connection with computer-implemented methods described in this specification.

Like reference numbers and designations in the various drawings indicate like elements.

### DETAILED DESCRIPTION

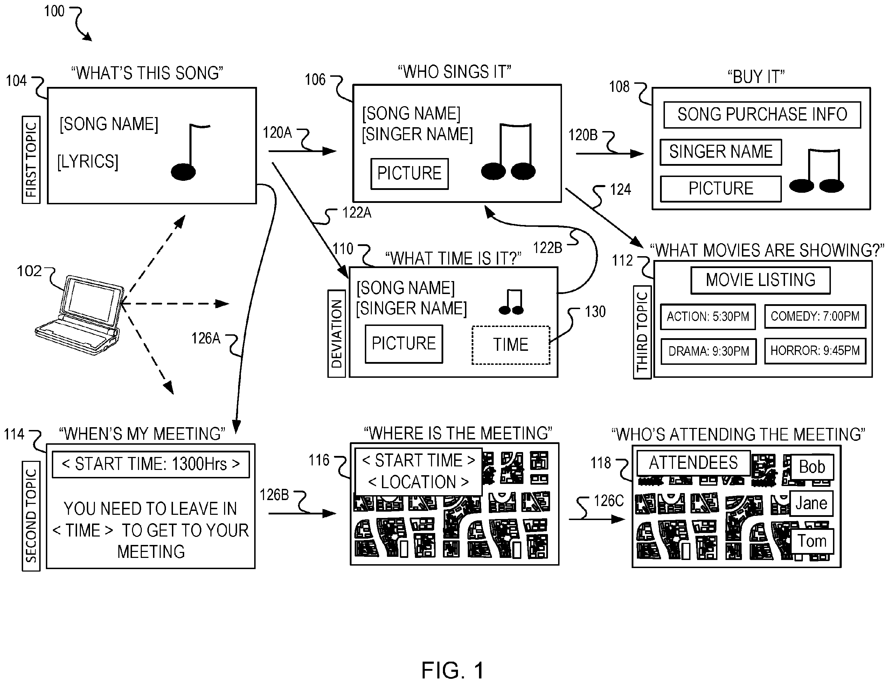

FIG. 1 illustrates multiple graphical interfaces that are associated with various visual flow examples. Graphical interfaces for the visual flows can correspond to electronic conversations that occur between a user and an assistant device or between a user and a virtual assistant an example client/computing device.

As described in more detail below, the graphical interfaces can be generated for output using a client device 102 based on data signals that are processed for sequentially or simultaneously displaying multiple distinct interface templates. Client device 102 can be an example electronic device, such as a mobile smart phone, a desktop computer, a laptop computer, a smart television, a streaming device, an assistant device, a home-based operating system, a digital gaming console, smart watch devices, electronic wearable devices, a tablet/reader device or other related devices configured to execute software instructions and application programs for enabling a user to interact with a virtual assistant.

In the implementation of FIG. 1, multiple interface templates are shown and respective sets of templates can correspond to a particular topic of an electronic conversation between a user and a virtual assistant. In alternative implementations, an electronic conversation can occur between at least two individual users, or between at least two individual users and a virtual assistant, where a local or cloud-based virtual assistant manages presentation of the interface templates to each user during the conversation. In general, electronic conversations can include a multitude of topics, individuals, entities, and other subject matter, e.g., sports, weather, popular culture, politics, entertainment, technology, etc.

For example, interface templates 104, 106, and 108 can be displayed using client device 102 as part of a visual flow 120A/B for a conversational topic about digital music/songs being played using client device 102. Interface template 110 can be displayed using client device 102 as part of a visual flow 122A/B for a conversational topic about the current time. Likewise, interface template 112 can be displayed using client device 102 as part of a visual flow 124 for a conversational topic about the movie listings. Further, interface templates 114, 116, and 118 can be displayed using client device 102 as part of a visual flow 126A/B/C for a conversational topic about a meeting.

As described in more detail below, a computing system includes client device 102 and at least one device of the system (e.g., device 102 or another device) executes software instructions for enabling a virtual assistant. Visual flows 120A/B, 122A/B, 124, and 126A/B/C can each relate to different conversational topics and can correspond to different conversational treads involving a user and the virtual assistant. The system is configured to detect non-linearity in chat dialogue or electronic conversations, transition between parallel, yet distinct, conversational treads, and present reply data/information at client device 102 in a variety of display formats.

For example, a user may be streaming music and wants to know the name of a particular song. The system receives a voice query when a user asks the virtual assistant "what's this song?" The system can use interface template 104 to initiate a visual flow 120A/B and display information at client device 102 that responds to the query "what's this song?" The system may also receive voice input indicating the user asks "who sings it?" e.g., a follow on query about the song. In response to receiving this follow on query, visual flow 120A/B can include presenting interface template 106 at the client device as the system transitions to displaying information about the singer after having displayed information that responded to the query about the song title/name.

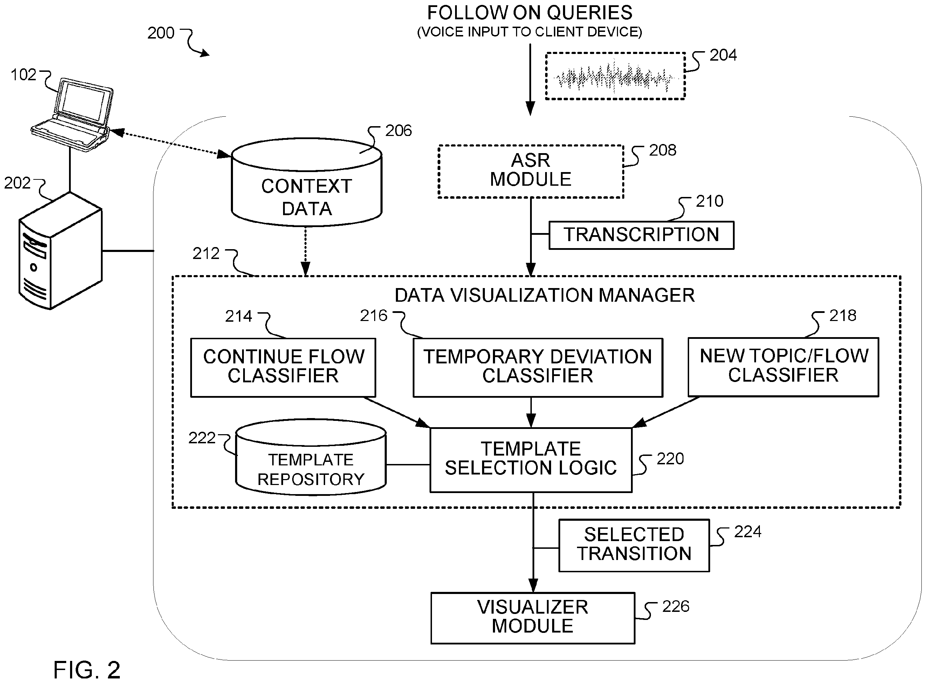

The system can transition to interface template 106 in response to analyzing a transcription of the query and identifying the follow on query ("who sings it?") as being a subsequent query that is contextual to an on-going chat dialogue/conversation between the user and the virtual assistant. In some implementations, a follow on query is contextual to an on-going chat dialogue when the follow on query corresponds to at least the topic of the conversation, e.g., music or songs. Use of query transcriptions and contextual data are described in more detail below with reference to FIG. 2.

While displaying information about the song and the singer, the system may receive a voice query where a user asks the virtual assistant "what time is it?" The system can use interface template 110 to initiate a visual flow 122A/B and display information that includes current time 130. In some implementations, current time 130 is presented at client device 102 as a pop-out feature in a portion of a display screen or user interface that also includes information that responds to one or more earlier or preceding queries. In some instances, a query such as "what time is it?" is identified by the system as a temporary deviation from a current conversational topic and, thus, is presented for display as a pop-out feature rather than being identified as a new topic for a new visual flow.

Visual flow 120A/B can be a first conversational tread about a first topic. During this first conversation, the system can receive one or more follow on queries when a user asks the virtual assistant "what movies are showing," e.g., initiating second conversation tread about a second topic and/or "when's my meeting?" e.g., initiating third conversation tread about a third topic. As shown in FIG. 1, the system can use interface template 112 to initiate visual flow 124 and display information at client device 102 that responds to the query "what movies are showing?" Likewise, system can use interface template 114 to initiate visual flow 126A and display information at client device 102 that responds to the query "when's my meeting?"

In some implementations, the system transitions to interface template 112 or 114 to initiate visual flow 124 or 126A/B/C in response to identifying a follow on query ("when's my meeting?" or "what movies are showing?") as being a subsequent query that is non-linear and/or non-contextual to an on-going chat dialogue about a different topic that relates to music or songs. The system is configured to store, and subsequently access and display, information relating to multiple conversational treads about differing or related topics. Hence, the system can detect non-linearity between two or more electronic conversations, transition between parallel, yet distinct, conversational treads, and present responses using a display of client device 102 (or a display device that interacts with client device 102) in a variety of display formats.

FIG. 2 illustrates a system diagram of an example computing system 200 for generating the multiple distinct interface templates described above with reference to FIG. 1. System 200 generally includes a computing device 202 that is associated with client device 102. In some implementations, computing device 202 is a local, remote, or cloud-based computing server configured to exchange data signals with circuit components of client device 102. In other implementations, computing device 202 electronically couples to, and is colocated with, client device 102. In some instances, computing device 202 can be located within, or integrated with, client device 102 as a hardware circuit or specialized hardware computing module of the client device.

As described in more detail below, system 200 receives user input 204 and executes a variety of computational and analytical processes for selecting particular visual interface templates. System 200 causes the selected interface templates to be provided as an output to a user via a display of client device 102. As indicated above, visual flows can include templates for graphically displaying information about particular topics of an electronic conversation between a user and a virtual assistant. The interface templates are used to display information to a user as the user engages in an electronic conversation with at least a virtual assistant of client device 102 or device 202.

Computing device 202 includes an automatic speech recognition (ASR) module 208, a data visualization manager 212, and a visualizer module 226. In some implementations, modules 208, 226, and visualization manager 212 are each collectively or individually included in, or accessible by, computing device 202. Additionally, the described functional and computational processes of modules 208, 226, and visualization manager 212 can be enabled by computing logic or programmed instructions executable by processors and memory components associated with computing device 202.

As used in this specification, the term "module" is intended to include, but is not limited to, one or more computers/computing devices configured to execute software programs that include program code that causes a processing unit(s) of the computing device to execute one or more functions. The term "computer" is intended to include any data processing or computing devices/systems, such as a desktop computer, a laptop computer, a mainframe computer, a personal digital assistant, a server, a handheld device, or any other device able to process data.

Computing device 202 can include one or more processors, memory, and data storage components that collectively form one or more computational/data processing systems of device 202. The processors of the data processing systems process instructions for execution by computing device 202, including instructions stored in the memory or on the storage device to display graphical information for a graphical user interface (GUI) via an example display of client device 102. Execution of the stored instructions can cause one or more of the actions described herein to be performed by computing device 202, by client device 102, or both.

In other implementations, multiple processors may be used, as appropriate, along with multiple memories and types of memory. For example, computing device 202 may be connected with multiple other computing devices, with each device (e.g., a server bank, groups of servers, modules, or a multi-processor system) performing portions of the actions or operations associated with the various logical flows, data analysis, or computing processes described in this specification.

ASR module 208 provides computer-driven transcriptions of spoken language into readable text. For example, speech recognition can include use of computing logic to identify words and phrases in a spoken language and to convert the words and phrases to a machine-readable format. In particular, ASR module 208 executes speech recognition logic for processing audio signal data to transcribe speech utterances for initial and follow on voice queries received as user input 204. In some implementations, computing device 202 executes query recognition logic of ASR module 208 to generate transcriptions of initial and follow on voice queries received by client device 102 or computing device 202. In some instances, system 200 uses ASR module 208 to generate a transcription 210 and provides the transcription to visualization manager 212.

Visualization manager 212 is configured to manage data visualization outputs based on analysis of context data 206 as well as analysis of words or phrases included in transcription 210. Context data 206 can be generated by one or more sensors, sensing features, or other data and signal input features associated with client device 102 or system 200. Context data 206 can include a variety of different contextual information about the environment in which client device 102 is located as well as the user that provides voice input queries to client device 102 and computing device 202.

For example, context data 206 can include information about a particular resource page presented for display to a user, interests or preferences of the user, current time, current and prior locations of the user, data about messages and user contacts, data about computing applications, current and prior conversation topics, or other contextual data/information about client device 102 and/or an example user of the device 102. In some implementations, context data 206 corresponds to an example storage/computer-readable medium that includes parameter values and/or words and text phrases that may be accessed and analyzed using components of system 200.

Visualization manager 212 includes: i) a continue visual flow classifier module 214 for identifying voice input as a follow on voice query that corresponds to a particular topic of an electronic conversation; ii) a temporary deviation classifier module 216 for identifying voice input as a follow on voice query that is a temporary deviation from a particular topic of an electronic conversation; and iii) a new visual flow classifier module 218 for identifying voice input as a follow on voice query that is unrelated to a particular topic of an electronic conversation.

Computing device 202 can use an example machine learning system to generate predictive classifier models based on trained neural networks that execute one or more learning operations (e.g., deep learning operations). For example, neural networks can be trained using data for a variety of different voice queries, context data 206, and multiple words and phrases of electronic conversation topics that cover a variety of topics. In some implementations, each of classifier modules 214, 216, and 218 correspond to respective predictive classifier models of visualization manager 212.

Visualization manager 212 further includes template selection logic 220 that is executed by at least one processor of computing device 202 to cause selection of multiple interface templates from a template repository 222. In some implementations, visualization manager 212 executes program code for generating data visualization outputs, such as interface templates that include images, diagrams and animations, or digital videos that communicate or display information.

For example, visualization manager 212 can use logic 220 to generate interface templates based on portions of graphical data from predefined templates that are accessible from template repository 222. In alternative implementations, visualization manager 212 is associated with an example assistant module of computing device 202 that executes features and functions relating to a virtual assistant of system 200.

Visualization manager 212 manages selection of visualization outputs by analyzing the transcription 210 and context data 206 to identify or characterize voice inputs received by client device 102. For example, client device 102 can receive user input 204 (e.g., a voice query), transmit the voice data for user input 204 to computing device 202, and device 202 can generate transcription 210 transcribing the query, and access context data 206 received simultaneously with user input 204.

Each of classifier modules 214, 216, and 218 can analyze transcription 210 and context data 206, and based on this analysis, generate respective scores. For example, continue visual flow classifier module 214 can generate a first score (e.g., 0.34), temporary deviation classifier module 216 can generate a second score (e.g., 0.91), and new visual flow classifier module 218 can generate a third score (e.g., 0.26).

Template selection logic 220 of visualization manager 212 is executed to analyze the respective scores. For example, a specialized hardware circuit of visualization manager 212 can receive data signals that indicate parameter values representing the respective scores. The hardware circuit can include data processing devices that execute program code for analyzing and comparing respective parameter values that represent individual scores.

In some implementations, the hardware circuit forms a visual flow generator of an assistant module that receives the respective scores from each of classifier modules 214, 216, and 218. As indicated above, the visual flow generator can be configured to generate interface templates based on portions of graphical data from interface templates accessible from template repository 222.

The respective scores are analyzed to identify the relationship between voice query 204 and an electronic conversation involving at least a user and client device 102. The electronic conversation can relate to a multitude of topics (e.g., particular individuals, entities, sports, weather forecasts, popular culture, politics, entertainment, technology, etc.). In some implementations, the highest score generated from among classifier modules 214, 216, and 218 is used to identify the relationship between voice query 204 and the electronic conversation.

Based on analysis of the respective scores, a particular query (e.g., a follow on query) can be identified as one of three types of queries. For example, the query can be identified as i) a query that corresponds to the particular topic of the electronic conversation; ii) a query that temporarily deviates from the particular topic of the electronic conversation; or iii) a query that is unrelated to the particular topic of the electronic conversation.

In some implementations, identifying a voice query/follow on query as corresponding to a topic of an electronic conversation includes determining whether the query has a threshold relevance to either the topic, an earlier query/input 204, or both. In some instances, an earlier voice query/input 204 is either user input that initiated the electronic conversation or a query that preceded a follow on query. Computing device 202 can use continue flow classifier module 214 of visualization manager to make the threshold relevance determination.

For example, device 202 can generate a transcription 210 of the follow on query and use classifier module 214 to analyze data contents (e.g., words or phrases) of at least transcription 210. In response to analyzing transcription 210, the follow on voice query can be determined to have a threshold relevance based on a comparison of at least: i) data contents of transcription 210 and data about a query that preceded the follow on query; and/or ii) data contents of transcription 210 and data about the particular topic of the electronic conversation.

Classifier module 214 can generate a score that characterizes the comparison of transcription 210, the topic of the electronic conversation, and a query that preceded the follow on query. In some implementations, scores can range from 0.1 to 1.0, where scores closer to 1.0 indicate that the follow on query has substantial relevance to either the topic of the electronic conversation, a query that preceded the follow on query, or both.

In some implementations, data about a query that preceded the follow on query and data about the particular topic of the electronic conversation are accessed from context data 206. As noted above, each of classifier modules 214, 216, and 218 can analyze transcription 210 and context data 206, and based on this analysis, generate respective scores. In some implementations, computing device 202 determines whether a follow on query has a threshold relevance to either the conversation's topic or an earlier query when a score (e.g., 0.63) generated by classifier module 214 exceeds a threshold score (e.g., 0.5).

In response to determining that the follow on voice query has the threshold relevance, device 202 can determine whether the score generated by classifier module 214 (e.g., 0.63) exceeds each of: i) the score (e.g., 0.98) generated by classifier module 216; and ii) the score (e.g., 0.32) generated by classifier module 218. Device 202 makes this determination by comparing the respective scores generated by each module. If the score generated by classifier module 214 exceeds the respective scores of modules 216 and 218, then device 202 identifies the voice query as corresponding to a particular topic of the electronic conversation.

In some implementations, the score generated by temporary deviation classifier module 216 can exceed the respective scores of continuous flow classifier module 214 and new topic/flow classifier module 218. If a comparison of all scores indicates that classifier module 216 generates the highest score, then device 202 identifies the follow on voice query as a query that temporarily deviates from the particular topic of the electronic conversation. In some implementations, classifier module 218 determines that the follow on query is associated with a particular query category. Device 202 then identifies the query as a temporary deviation from the conversation topic based in part on the query category.

For example, a follow on query such as "what time is it," "what is today's date," "set a timer for 10 minutes," or "stop/cancel the timer" can be each associated with a query category relating to temporal or time-related queries. Likewise, a follow on query such as "what is the weather/temperature today?" can be associated with a query category relating to weather or temperature queries, while a follow on query/user input such as "turn up/down the volume?" can be associated with a query/input category relating to device operations.

Computing device 202 can include a predefined list of query or voice input categories that are used to determine whether a voice input 204 (e.g., a follow on query) is a temporary deviation from a particular topic of the electronic conversation. In some implementations, classifier module 218 accesses the predefined list and associates the follow on query with a query/input category of the list. Device 202 can then identify the follow on voice query as a temporary deviation from the particular topic of the electronic conversation based at least in part on the query category in which the follow on query is associated.

For example, transcription 210 is analyzed by classifier module 218 to identify or detect words or phrases, such as "time," "weather," "date," or "volume." The detected words may indicate that the follow on query/input has an association, or a strong association, with a category of the predefined list (e.g., time-related query category). In response to this analysis, classifier module 218 associates the follow on query with a category and generates a score that characterizes the association. A low score (e.g., 0.1) indicates a weak association between words of the follow on query and the category of the predefined list, a medium score (e.g., 0.5) indicates a moderate association between words of the follow on query and a category of the predefined list, and a high score (e.g., 0.9) indicates a strong association between words of the follow on query and a category of the predefined list.

In some implementations, the score generated by new flow classifier module 218 can exceed the respective scores of continuous flow classifier module 214 and temporary deviation classifier module 216. If a comparison of all scores indicates that classifier module 218 generates the highest score, then device 202 identifies the follow on voice query as a query that is unrelated, or not relevant, to a topic of an electronic conversation. For example, classifier module 218 can compare at least: i) data contents of transcription 210 and data about a query that preceded the follow on query; and/or ii) data contents of transcription 210 and data about the particular topic of the electronic conversation.

In response to performing this comparison, classifier module 218 can generate a score that characterizes the comparison of transcription 210, the topic of the electronic conversation, and a query that preceded the follow on query. In some implementations, scores generated by classifier module 218 can range from 0.1 to 1.0, where scores closer to 1.0 indicate that the follow on query is substantially irrelevant, or unrelated, to either the topic of the electronic conversation, a query that preceded the follow on query, or both.

Further, after analysis of the respective scores, the visual flow generator can execute template selection logic 220 to select a particular template based on the classifier module that outputs the highest score. In some implementations, rather than selecting a predefined template stored in template repository 222, the visual flow generator generates a template and uses to the generated for displaying information that is responsive to voice query 204.

In some instances, the computing device displays information that is responsive to an initial or preceding query and uses the selected (or generated) template for transitioning, e.g., selected transition 224, to a reply that responds to a follow on voice query. For example, execution of selection logic 220 causes the visual flow generator to select a template for displaying information at client device 102 that includes a response to the follow on voice query. The information can be displayed at client device 102 and presented to a user after client device 102 displays information having a response to a preceding voice query.

Visualizer module 226 generates a graphical representation using the template selected by the visual flow generator of manager 212. For example, computing device 202 can use visualizer module 226 to provide data representations using interface templates for visual flows 120A/B, 122A/B, and 124 described above. In some implementations, visualizer module 226 provides interface templates for output using a display of client device 102. In some instances, visual flows occur when module 226 provides an interface template for displaying information having a response to follow on voice query after having provided a previous interface template for displaying information having the response to the preceding voice query.

Hence, system 200 can transition between displaying various types of information that is responsive to queries about different or related conversational topics. Hence, system 200 is configured to detect non-linearity between multiple digital conversations, transition between parallel, yet distinct, conversational treads, and present reply data at client device 102 in a variety of display formats. For example, if a user asks a question to which there are multiple parts, system 200 can use visualization manager to analyze the query and can automatically parse or scroll through available content that responds to different parts of the query, e.g., using graphical data stored in template repository.

In some implementations, answers to voice query inputs 204, and actions of a virtual assistant that are responsive to voice queries, e.g., launching a video or music player, are embedded within a virtual assistant interface itself rather than using a virtual assistant application to navigate the actions outside of the virtual assistant interface. For example, voice inputs 204 can be used to manage and control an entire virtual assistant user interface, such that user voice commands and queries can drive an entire virtual assistant experience.

So, if a user wants to create a calendar event, system 200 can present a full screen calendar template interface, and the user could then say "set the event at 2pm" and the event would appear in the calendar interface. If the user says "wait no, actually 4pm," the event would move on the screen to the new slot and a user can make reference to information presented at the display screen using a voice command such as "tell me more about the second one. "

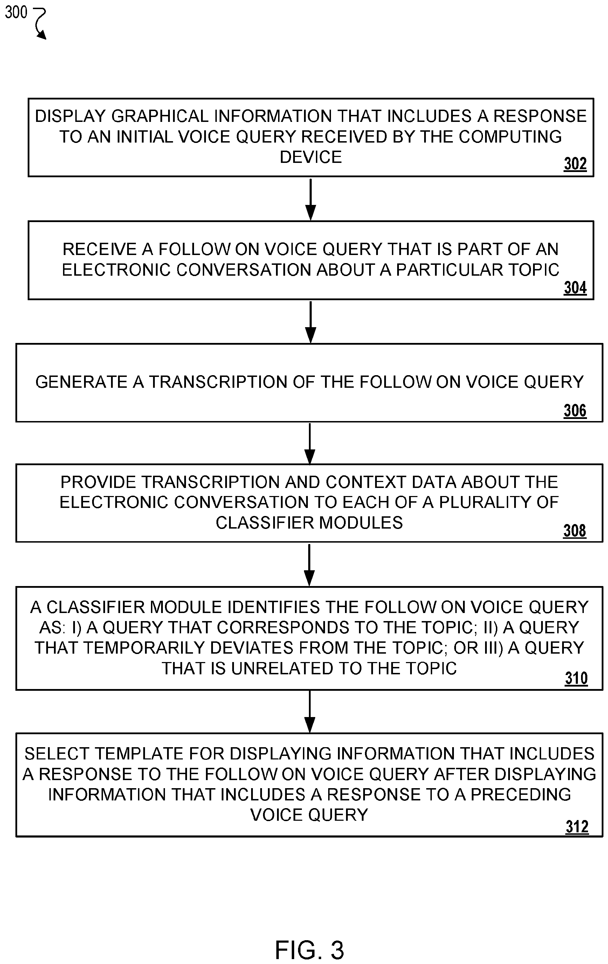

FIG. 3 is a flow diagram of an example process for populating an interest feed. Process 300 can be implemented using system 200 described above. Thus, descriptions of process 300 may reference one or more of the above-mentioned components, modules, or computational devices of system 200. In some implementations, described actions of process 300 are enabled by computing logic or software instructions executable by a processor and memory of an example electronic device, such as client device 102, server 202, or both.

At block 302 of process 300, system 200 causes graphical information to be displayed, where the graphical information includes a response to an initial voice query received by client device 102 and/or computing device 202. For example, system 200 can use a display device that is integral with client device 102, or that is spaced apart from, but colocated with, client device 102 to display the graphical information. In some implementations, device 202 provides the graphical information, and the response, for output to a user by using a display device to present or display the information at client device 102. At block 304, computing device 202 receives a follow on voice query that is part of an electronic conversation about a particular topic and, at block 306, device 202 uses ASR module 208 to generate a transcription(s) 210 of the follow on voice query.

Computing device 202 (or client device 102) can include an assistant module that executes computing logic for enabling functions and features of an example virtual assistant (e.g., a device assistant). In some implementations, a device assistant corresponds to a software program configured to provide virtual assistant functions to a user. For example, device assistants can be configured to detect or receive a voice query from a user, execute computations to analyze and retrieve data that is responsive to the query, and provide reply data representing a visual or auditory response based on the retrieved data.

In some implementations, a first computing device (e.g., client device 102) is used to display graphical information for responding to a voice query and a second computing device (e.g., device 202) includes the assistant module that processes voice query input for generating the graphical information displayed by the client device. For example, client device 102 can be a user's smartphone or a home-based smart-speaker device that includes, or wirelessly couples to, a display device, while the assistant module can correspond to a computing server that communicates with the smartphone or smart-speaker using wired or wireless communication protocols.

At block 308, computing device 202 causes the transcription 210 and at least a subset of context data 206 about the electronic conversation to be provided to each classifier module included in data visualization manager 212. At block 310, a plurality of classifier modules of visualization manager 212 each identify the follow on voice query as either: i) a query that corresponds to the topic of the electronic conversation; ii) a query that temporarily deviates from the topic of the electronic conversation; or iii) a query that is unrelated to the topic of the electronic conversation.

For example, computing device 202 uses classifier module 214 to generate a first score for identifying the follow on voice query as corresponding to the topic of the electronic conversation based on analysis of transcription 210 and the context data 206. Similarly, computing device 202 uses classifier module 216 to generate a second score for identifying the follow on voice query as being a temporary deviation from the topic of the electronic conversation based on analysis of transcription 210 and the context data 206. Further, computing device 202 uses classifier module 218 to generate a third score for identifying the follow on voice query follow on voice query as being unrelated to the particular topic of the electronic conversation based on analysis of transcription 210 and the context data 206.

As described above, each of classifier modules 214, 216, and 218 can correspond to a predictive classifier model of visualization manager 212 and computing device 202 can use a machine learning system to generate the predictive classifier models based on trained neural networks that execute deep learning operations. A predictive model that corresponds to a particular classifier module 214, 216, and 218 can be configured to perform inference determinations for executing each of the query identifying operations as described above for each classifier included in visualization manager 212.

At block 312, a visualization manager 212 executes template selection logic 220 and selects a template for displaying information that includes a response to the follow on voice query after displaying information that includes a response to a preceding voice query. In some implementations, client device 102 includes sufficient text-to-speech (TTS) functionality so that a user does not have to glance or look at a display of client device 102 to view or receive information that is responsive to a particular voice query.

For example, client device 102 can include TTS functions that causes the client device to output audio data using a computer-generated speech utterance of the textual data presented on a display of the client device 102. In some implementations, associated virtual assistant modes of client device 102 include full screen answer display mode, a resting state mode, and a full-screen voice transcription mode for viewing or receiving information that is responsive to a particular voice query.

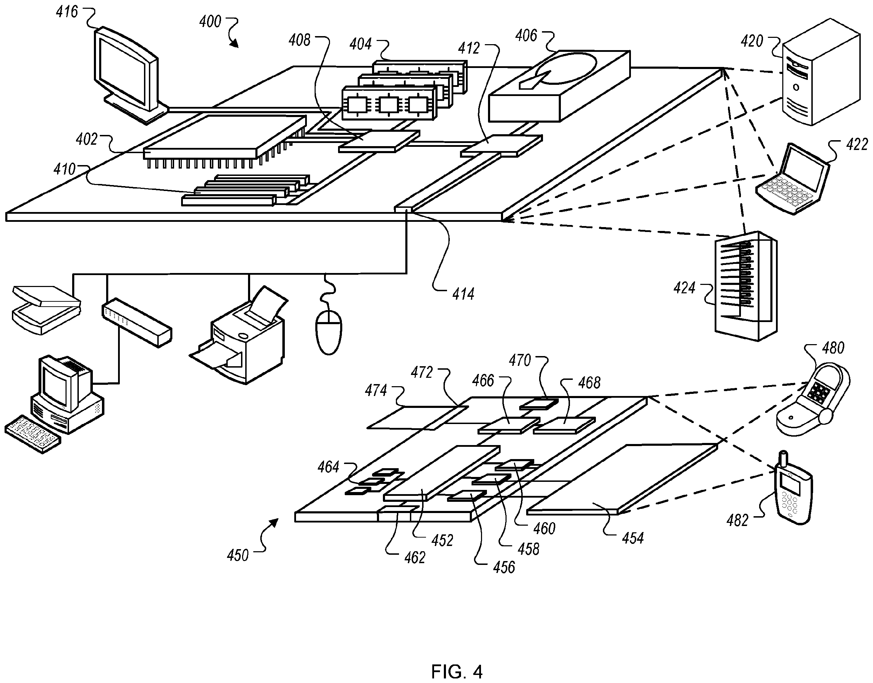

FIG. 4 is a block diagram of computing devices 400, 450 that may be used to implement the systems and methods described in this document, either as a client or as a server or plurality of servers. Computing device 400 is intended to represent various forms of digital computers, such as laptops, desktops, workstations, personal digital assistants, servers, blade servers, mainframes, and other appropriate computers. Computing device 450 is intended to represent various forms of mobile devices, such as personal digital assistants, cellular telephones, smartphones, smartwatches, head-worn devices, and other similar computing devices. The components shown here, their connections and relationships, and their functions, are meant to be exemplary only, and are not meant to limit implementations described and/or claimed in this document.

Computing device 400 includes a processor 402, memory 404, a storage device 406, a high-speed interface 408 connecting to memory 404 and high-speed expansion ports 410, and a low speed interface 412 connecting to low speed bus 414 and storage device 406. Each of the components 402, 404, 406, 408, 410, and 412, are interconnected using various busses, and may be mounted on a common motherboard or in other manners as appropriate. The processor 402 can process instructions for execution within the computing device 400, including instructions stored in the memory 404 or on the storage device 406 to display graphical information for a GUI on an external input/output device, such as display 416 coupled to high speed interface 408. In other implementations, multiple processors and/or multiple buses may be used, as appropriate, along with multiple memories and types of memory. Also, multiple computing devices 400 may be connected, with each device providing portions of the necessary operations (e.g., as a server bank, a group of blade servers, or a multi-processor system).

The memory 404 stores information within the computing device 400. In one implementation, the memory 404 is a computer-readable medium. In one implementation, the memory 404 is a volatile memory unit or units. In another implementation, the memory 404 is a non-volatile memory unit or units.

The storage device 406 is capable of providing mass storage for the computing device 400. In one implementation, the storage device 406 is a computer-readable medium. In various different implementations, the storage device 406 may be a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 404, the storage device 406, or memory on processor 402.

The high-speed controller 408 manages bandwidth-intensive operations for the computing device 400, while the low speed controller 412 manages lower bandwidth-intensive operations. Such allocation of duties is exemplary only. In one implementation, the high-speed controller 408 is coupled to memory 404, display 416 (e.g., through a graphics processor or accelerator), and to high-speed expansion ports 410, which may accept various expansion cards (not shown). In the implementation, low-speed controller 412 is coupled to storage device 406 and low-speed expansion port 414. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 400 may be implemented in a number of different forms, as shown in the figure. For example, it may be implemented as a standard server 420, or multiple times in a group of such servers. It may also be implemented as part of a rack server system 424. In addition, it may be implemented in a personal computer such as a laptop computer 422. Alternatively, components from computing device 400 may be combined with other components in a mobile device (not shown), such as device 450. Each of such devices may contain one or more of computing device 400, 450, and an entire system may be made up of multiple computing devices 400, 450 communicating with each other.

Computing device 450 includes a processor 452, memory 464, an input/output device such as a display 454, a communication interface 466, and a transceiver 468, among other components. The device 450 may also be provided with a storage device, such as a microdrive or other device, to provide additional storage. Each of the components 450, 452, 464, 454, 466, and 468, are interconnected using various buses, and several of the components may be mounted on a common motherboard or in other manners as appropriate.

The processor 452 can process instructions for execution within the computing device 450, including instructions stored in the memory 464. The processor may also include separate analog and digital processors. The processor may provide, for example, for coordination of the other components of the device 450, such as control of user interfaces, applications run by device 450, and wireless communication by device 450.

Processor 452 may communicate with a user through control interface 458 and display interface 456 coupled to a display 454. The display 454 may be, for example, a TFT LCD display or an OLED display, or other appropriate display technology. The display interface 456 may comprise appropriate circuitry for driving the display 454 to present graphical and other information to a user. The control interface 458 may receive commands from a user and convert them for submission to the processor 452. In addition, an external interface 462 may be provided in communication with processor 452, so as to enable near area communication of device 450 with other devices. External interface 462 may provide, for example, for wired communication (e.g., via a docking procedure) or for wireless communication (e.g., via Bluetooth or other such technologies).

The memory 464 stores information within the computing device 450. In one implementation, the memory 464 is a computer-readable medium. In one implementation, the memory 464 is a volatile memory unit or units. In another implementation, the memory 464 is a non-volatile memory unit or units. Expansion memory 474 may also be provided and connected to device 450 through expansion interface 472, which may include, for example, a SIMM card interface. Such expansion memory 474 may provide extra storage space for device 450, or may also store applications or other information for device 450. Specifically, expansion memory 474 may include instructions to carry out or supplement the processes described above, and may include secure information also. Thus, for example, expansion memory 474 may be provided as a security module for device 450, and may be programmed with instructions that permit secure use of device 450. In addition, secure applications may be provided via the SIMM cards, along with additional information, such as placing identifying information on the SIMM card in a non-hackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 464, expansion memory 474, or memory on processor 452.

Device 450 may communicate wirelessly through communication interface 466, which may include digital signal processing circuitry where necessary. Communication interface 466 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radiofrequency transceiver 468. In addition, short-range communication may occur, such as using a Bluetooth, WiFi, or other such transceiver (not shown). In addition, GPS receiver module 470 may provide additional wireless data to device 450, which may be used as appropriate by applications running on device 450.

Device 450 may also communicate audibly using audio codec 460, which may receive spoken information from a user and convert it to usable digital information. Audio codec 460 may likewise generate audible sound for a user, such as through a speaker, e.g., in a handset of device 450. Such sound may include sound from voice telephone calls, may include recorded sound (e.g., voice messages, music files, etc.) and may also include sound generated by applications operating on device 450.

The computing device 450 may be implemented in a number of different forms, as shown in the figure. For example, it may be implemented as a cellular telephone 480. It may also be implemented as part of a smartphone 482, personal digital assistant, or other similar mobile device.

Various implementations of the systems and techniques described here can be realized in digital electronic circuitry, integrated circuitry, specially designed ASICs, computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs, also known as programs, software, software applications or code, include machine instructions for a programmable processor, and can be implemented in a high-level procedural and/or object-oriented programming language, and/or in assembly/machine language. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

As used herein, the terms "machine-readable medium" "computer-readable medium" refers to any computer program product, apparatus and/or device, e.g., magnetic discs, optical disks, memory, Programmable Logic Devices (PLDs) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The systems and techniques described here can be implemented in a computing system that includes a back-end component, e.g., as a data server, or that includes a middleware component such as an application server, or that includes a front-end component such as a client computer having a graphical user interface or a Web browser through which a user can interact with an implementation of the systems and techniques described here, or any combination of such back-end, middleware, or front-end components. The components of the system can be interconnected by any form or medium of digital data communication such as, a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

Further to the descriptions above, a user may be provided with controls allowing the user to make an election as to both if and when systems, programs or features described herein may enable collection of user information (e.g., information about a user's social network, social actions or activities, profession, a user's preferences, or a user's current location), and if the user is sent content or communications from a server. In addition, certain data may be treated in one or more ways before it is stored or used, so that personally identifiable information is removed.

For example, in some embodiments, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

Particular embodiments of the subject matter have been described. The scope of the application is described by the appended claims.

## Claims

1. A computer-implemented method, the method comprising:
providing, for display using a computing device, graphical information that includes a response to an initial voice query received by the computing device;
receiving (304), by an assistant module that communicates with the computing device, a follow on voice query that is part of an electronic conversation about a particular topic;
generating (306), by query recognition logic of the computing device, a transcription of the follow on voice query received by the assistant module;
providing (308), by the assistant module, the transcription and context data about the electronic conversation to each of a plurality of classifier modules associated with the computing device, the plurality of classifier modules comprising:
a first classifier module for identifying the follow on voice query as corresponding to the particular topic of the electronic conversation;
a second classifier module for identifying the follow on voice query as a temporary deviation from the particular topic of the electronic conversation; and
a third classifier module for identifying the follow on voice query as being unrelated to the particular topic of the electronic conversation;
identifying (310), by one of the plurality of classifier modules, the follow on voice query as:
i) a query that corresponds to the particular topic;
ii) a query that temporarily deviates from the particular topic; or
iii) a query that is unrelated to the particular topic;
based on the identification, selecting (312), by the assistant module, a template from a template repository for displaying information that includes a response to the follow on voice query after the computing device displays information that includes a response to a preceding voice query; and
providing, by the computing device and for output using a display, the selected template for displaying information that includes the response to the follow on voice query after having provided a previous template for displaying the information that includes the response to the preceding voice query,
wherein, upon identifying the follow on voice query as a query that temporarily deviates from the particular topic, the selected template comprises a pop-out feature to be displayed in a portion of a display that also includes the response to the preceding voice query, the pop-out feature displaying information that includes the response to the follow on voice query.

2. The method of claim 1, wherein identifying comprises:
generating, by a first classifier module and based on analysis of the transcription and the context data, a first score for identifying the follow on voice query as corresponding to the particular topic of the electronic conversation; and
generating, by a second classifier module and based on analysis of the transcription and the context data, a second score for identifying the follow on voice query as being unrelated to the particular topic of the electronic conversation.

3. The method of claim 2, wherein identifying further comprises:
generating, by a third classifier module and based on analysis of the transcription and the context data, a third score for identifying the follow on voice query as being a temporary deviation from the particular topic of the electronic conversation.

4. The method of claim 2 or 3, wherein identifying further comprises:
comparing the scores generated by the classifier modules; and
using the highest score from among the generated scores to identify the follow on voice query as:
i) corresponding to the particular topic of the electronic conversation;
ii) unrelated to the particular topic of the electronic conversation; or
iii) being a temporary deviation from the particular topic of the electronic conversation.

5. The method of any preceding claim, wherein selecting comprises:
receiving, by a visual flow generator of the assistant module, respective scores from each of the plurality of classifier modules; and
generating, by the visual flow generator and based on the respective scores, the selected template.

6. The method of any preceding claim, wherein identifying the follow on voice query as a query that corresponds to the particular topic of the electronic conversation comprises:
determining that the follow on voice query has a threshold relevance to at least one of:
i) the particular topic; or
ii) the preceding query.

7. The method of claim 6, wherein determining that the follow on voice query has the threshold relevance comprises:
analyzing contents of the transcription of the follow on voice query; and
in response to analyzing, determining that the follow on voice query has the threshold relevance based on a comparison of at least:
i) contents of the transcription and data about the preceding query; or
ii) contents of the transcription and data about the particular topic.

8. The method of claim 6 or 7, wherein identifying the follow on voice query as the query that is the temporary deviation from the particular topic of the electronic conversation comprises:
determining that the follow on voice query is associated with a particular query category; and
identifying the follow on voice query as a temporary deviation from the particular topic of the electronic conversation based on the particular query category.

9. The method of any of the preceding claims, wherein identifying further comprises:
identifying that the follow on query comprises multiple parts; and
treating each part of the query as a separate follow on query.

10. An electronic system comprising:
one or more processing devices;
one or more non-transitory machine-readable storage devices for storing instructions that are executable by the one or more processing devices to cause performance of a method according to any preceding claim.

11. One or more non-transitory machine-readable storage devices for storing instructions that are executable by one or more processing devices to cause performance of a method according to any of claims 1 to 9.

## Patentansprüche

1. Computerimplementiertes Verfahren, wobei das Verfahren Folgendes umfasst:
Bereitstellen grafischer Informationen zur Anzeige unter Verwendung einer Rechenvorrichtung, die eine Antwort auf eine anfängliche Sprachabfrage beinhalten, die von der Rechenvorrichtung empfangen wurde;
Empfangen (304) einer Folge-Sprachabfrage, die Teil eines elektronischen Gesprächs über ein konkretes Thema ist, durch ein Assistentenmodul, das mit der Rechenvorrichtung kommuniziert;
Generieren (306) einer Transkription der durch das Assistentenmodul empfangenen Folge-Sprachabfrage durch eine Abfrageerkennungslogik der Rechenvorrichtung;
Bereitstellen (308) der Transkriptions- und Kontextdaten zu der elektronischen Konversation durch das Assistentenmodul an jedem einer Vielzahl von Klassifikatormodulen, die der Rechenvorrichtung zugeordnet sind, wobei die Vielzahl von Klassifikatormodulen Folgendes umfasst:
ein erstes Klassifikatormodul zum Identifizieren der Folge-Sprachabfrage als dem konkreten Thema des elektronischen Gesprächs entsprechend;
ein zweites Klassifikatormodul zum Identifizieren der Folge-Sprachabfrage als vorübergehende Abweichung von dem konkreten Thema des elektronischen Gesprächs; und
ein drittes Klassifikatormodul zum Identifizieren der Folge-Sprachabfrage als keinen Bezug zu dem konkreten Thema des elektronischen Gesprächs;
Identifizieren (310) der Folge-Sprachabfrage durch eines der Vielzahl von Klassifikatormodulen als Folgendes:
i) eine Abfrage, die dem konkreten Thema entspricht;
ii) eine Abfrage, die vorübergehend von dem konkreten Thema abweicht; oder
iii) eine Abfrage, die keinen Bezug zu dem konkreten Thema hat;
auf Grundlage der Identifizierung, Auswählen (312) einer Vorlage aus einem Vorlagen-Repository zum Anzeigen von Informationen, die eine Antwort auf die Folge-Sprachabfrage beinhalten, durch das Assistentenmodul, nachdem die Rechenvorrichtung Informationen angezeigt hat, die eine Antwort auf eine vorhergehende Sprachabfrage beinhalten; und
Bereitstellen der ausgewählten Vorlage zum Anzeigen von Informationen, welche die Antwort auf die Folge-Sprachabfrage beinhalten, durch die Rechenvorrichtung und zur Ausgabe unter Verwendung einer Anzeige, nachdem eine vorherige Vorlage zum Anzeigen der Informationen bereitgestellt wurde, welche die Antwort auf die vorherige Sprachabfrage beinhalten,
wobei die ausgewählte Vorlage beim Identifizieren der Folge-Sprachabfrage als eine Abfrage, die vorübergehend von dem konkreten Thema abweicht, eine Pop-out-Funktion umfasst, die in einem Abschnitt einer Anzeige anzuzeigen ist, die auch die Antwort auf die vorhergehende Sprachabfrage beinhaltet, wobei die Pop-out-Funktion Informationen anzeigt, welche die Antwort auf die Folge-Sprachabfrage beinhalten.

2. Verfahren nach Anspruch 1, wobei das Identifizieren Folgendes umfasst:
Generieren einer ersten Bewertung zum Identifizieren der Folge-Sprachabfrage als dem konkreten Thema des elektronischen Gesprächs entsprechend, durch ein erstes Klassifikatormodul und auf Grundlage einer Analyse der Transkription und der Kontextdaten; und
Generieren einer zweiten Bewertung zum Identifizieren der Folge-Sprachabfrage als keinen Bezug zu dem konkreten Thema des elektronischen Gesprächs, durch ein zweites Klassifikatormodul und auf Grundlage der Analyse der Transkription und der Kontextdaten.

3. Verfahren nach Anspruch 2, wobei das Identifizieren ferner Folgendes umfasst:
Generieren einer dritten Bewertung zum Identifizieren der Folge-Sprachabfrage als eine vorübergehende Abweichung von dem konkreten Thema der elektronischen Unterhaltung, durch ein drittes Klassifikatormodul und auf Grundlage der Analyse der Transkription und der Kontextdaten.

4. Verfahren nach Anspruch 2 oder 3, wobei das Identifizieren ferner Folgendes umfasst:
Vergleichen der durch die Klassifikatormodule generierten Bewertungen; und
Verwenden der höchsten Bewertung unter den generierten Bewertungen, um die Folge-Sprachabfrage als Folgendes zu identifizieren:
i) dem konkreten Thema des elektronischen Gesprächs entsprechend;
ii) keinen Bezug zu dem konkreten Thema der elektronischen Konversation; oder
iii) eine vorübergehende Abweichung von dem konkreten Thema des elektronischen Gesprächs.

5. Verfahren nach einem vorhergehenden Anspruch, wobei das Auswählen Folgendes umfasst:
Empfangen der jeweiligen Bewertungen von jedem der Vielzahl von Klassifikatormodulen durch einen visuellen Flussgenerator des Assistentenmoduls; und
Generieren der ausgewählten Vorlage durch den visuellen Flussgenerator und auf Grundlage der jeweiligen Bewertungen.

6. Verfahren nach einem vorhergehenden Anspruch, wobei das Identifizieren der Folge-Sprachabfrage als eine Abfrage, die dem konkreten Thema des elektronischen Gesprächs entspricht, Folgendes umfasst:
Bestimmen, dass die Folge-Sprachabfrage eine Schwellenrelevanz für mindestens eines von Folgenden aufweist:
i) das konkrete Thema; oder
ii) die vorhergehende Abfrage.

7. Verfahren nach Anspruch 6, wobei das Bestimmen, dass die Folge-Sprachabfrage die Schwellenrelevanz aufweist, Folgendes umfasst:
Analysieren von Inhalten der Transkription der Folge-Sprachabfrage; und
als Reaktion auf das Analysieren, Bestimmen, dass die Folge-Sprachabfrage die Schwellenrelevanz aufweist, auf Grundlage eines Vergleichs von mindestens Folgenden:
i) Inhalte der Transkription und Daten zu der vorhergehenden Abfrage; oder
ii) Inhalte der Transkription und Daten zu dem konkreten Thema.

8. Verfahren nach Anspruch 6 oder 7, wobei das Identifizieren der Folge-Sprachabfrage als die Abfrage, welche die vorübergehende Abweichung von dem konkreten Thema des elektronischen Gesprächs, Folgendes umfasst:
Bestimmen, dass die Folge-Sprachabfrage einer konkreten Abfragekategorie zugeordnet ist; und
Identifizieren der Folge-Sprachabfrage als eine vorübergehende Abweichung von dem konkreten Thema des elektronischen Gesprächs auf Grundlage der konkreten Abfragekategorie.

9. Verfahren nach einem der vorhergehenden Ansprüche, wobei das Identifizieren ferner Folgendes umfasst:
Identifizieren, dass die Folge-Abfrage mehrere Teile umfasst; und
Behandeln jedes Teils der Abfrage als getrennte Folge-Abfrage.

10. Elektronisches System, umfassend:
ein oder mehrere Verarbeitungsvorrichtung;
eine oder mehrere nicht flüchtige maschinenlesbare Speichervorrichtungen zum Speichern von Anweisungen, die durch die eine oder mehreren Verarbeitungsvorrichtungen ausführbar sind, um eine Durchführung eines Verfahrens nach einem vorhergehenden Anspruch zu bewirken.

11. Eine oder mehrere nicht flüchtige maschinenlesbare Speichervorrichtungen zum Speichern von Anweisungen, die durch eine oder mehrere Verarbeitungsvorrichtungen ausführbar sind, um eine Durchführung eines Verfahrens nach einem der Ansprüche 1 bis 9 zu bewirken.

## Revendications

1. Procédé mis en oeuvre par ordinateur, le procédé comprenant :
la fourniture, en vue de l'affichage à l'aide d'un dispositif informatique, des informations graphiques qui comprennent une réponse à une requête vocale initiale reçue par le dispositif informatique ;
la réception (304), par un module assistant qui communique avec le dispositif informatique, d'une requête vocale de suivi qui fait partie d'une conversation électronique concernant un sujet particulier ;
la génération (306), par la logique de reconnaissance de requête du dispositif informatique, d'une transcription de la requête vocale de suivi reçue par le module assistant ;
la fourniture (308), par le module assistant, des données de transcription et de contexte concernant la conversation électronique à chacun d'une pluralité de modules de classification associés au dispositif informatique, la pluralité de modules de classification comprenant :
un premier module de classification destiné à identifier la requête vocale de suivi comme correspondant au sujet particulier de la conversation électronique ;
un deuxième module de classification destiné à identifier la requête vocale de suivi comme une divergence temporaire par rapport au sujet particulier de la conversation électronique ; et
un troisième module de classification destiné à identifier la requête vocale de suivi comme étant sans rapport avec le sujet particulier de la conversation électronique ;
l'identification (310), par l'un de la pluralité de modules de classification, de la requête vocale de suivi comme :
i) une requête qui correspond au sujet particulier ;
ii) une requête qui diverge temporairement du sujet particulier ; ou
iii) une requête qui est sans rapport avec le sujet particulier ;
sur la base de l'identification, la sélection (312), par le module assistant, un modèle à partir d'un répertoire de modèles en vue de l'affichage des informations qui comprennent une réponse à la requête vocale de suivi après que le dispositif informatique a affiché des informations qui comprennent une réponse à une requête vocale précédente ; et
la fourniture, par le dispositif informatique et pour une émission en sortie à l'aide d'un dispositif d'affichage, du modèle sélectionné en vue de l'affichage des informations qui comprennent la réponse à la requête vocale de suivi après avoir fourni un modèle précédent en vue de l'affichage des informations qui comprennent la réponse à la requête vocale précédente,
lors de l'identification de la requête vocale de suivi comme une requête qui diverge temporairement du sujet particulier, ledit modèle sélectionné comprenant une fonctionnalité contextuelle à afficher dans une partie d'un dispositif d'affichage qui comprend également la réponse à la requête vocale précédente, la fonctionnalité contextuelle affichant des informations qui comprennent la réponse à la requête vocale de suivi.

2. Procédé de la revendication 1, ladite identification comprenant :
la génération, par un premier module de classification et sur la base de l'analyse de la transcription et des données de contexte, d'un premier score pour identifier la requête vocale de suivi comme correspondant au sujet particulier de la conversation électronique ; et
la génération, par un deuxième module de classification et sur la base de l'analyse de la transcription et des données de contexte, d'un second score pour identifier la requête vocale de suivi comme étant sans rapport avec le sujet particulier de la conversation électronique.

3. Procédé de la revendication 2, ladite identification comprenant en outre :
la génération, par un troisième module de classification et sur la base de l'analyse de la transcription et des données de contexte, d'un troisième score pour identifier la requête vocale de suivi comme étant une divergence temporaire par rapport au sujet particulier de la conversation électronique.

4. Procédé de la revendication 2 ou 3, ladite identification comprenant en outre :
la comparaison des scores générés par les modules de classification ; et
l'utilisation du score le plus élevé parmi les scores générés pour identifier la requête vocale de suivi comme :
i) correspondant au sujet particulier de la conversation électronique ;
ii) étant sans rapport avec le sujet particulier de la conversation électronique ; ou
iii) étant une divergence temporaire par rapport au sujet particulier de la conversation électronique.

5. Procédé d'une quelconque revendication précédente, ladite sélection comprenant :
la réception, par un générateur de flux visuel du module assistant, des scores respectifs en provenance de chacun de la pluralité de modules de classification ; et
la génération, par le générateur de flux visuel et sur la base des scores respectifs, dudit modèle sélectionné.

6. Procédé d'une quelconque revendication précédente, ladite identification de la requête vocale de suivi comme une requête qui correspond au sujet particulier de la conversation électronique comprenant :
la détermination que la requête vocale de suivi comporte un seuil de pertinence pour au moins un parmi :
i) le sujet particulier ; ou
ii) la requête précédente.

7. Procédé de la revendication 6, ladite détermination que la requête vocale de suivi présente la pertinence seuil comprenant :
l'analyse du contenu de la transcription de la requête vocale de suivi ; et
en réponse à l'analyse, la détermination que la requête vocale de suivi présente la pertinence seuil sur la base d'une comparaison d'au moins :
i) le contenu de la transcription et des données concernant la requête précédente ; ou
ii) ii) le contenu de la transcription et des données concernant le sujet particulier.

8. Procédé de la revendication 6 ou 7, ladite identification de la requête vocale de suivi comme la requête qui est la divergence temporaire par rapport au sujet particulier de la conversation électronique comprenant :
la détermination que la requête vocale de suivi est associée à une catégorie de requête particulière ; et
l'identification de la requête vocale de suivi comme une divergence temporaire par rapport au sujet particulier de la conversation électronique sur la base de la catégorie de requête particulière.

9. Procédé de l'une quelconque des revendications précédentes, ladite identification comprenant en outre :
l'identification que la requête de suivi comprend de multiples parties ; et
le traitement de chaque partie de la requête comme une requête de suivi distincte.

10. Système électronique comprenant :
un ou plusieurs dispositifs de traitement ;
un ou plusieurs dispositifs de stockage lisibles par machine non transitoires destinés au stockage des instructions qui sont exécutables par le ou les dispositifs de traitement pour entraîner la réalisation d'un procédé selon une quelconque revendication précédente.

11. Dispositif(s) de stockage lisible(s) par machine non transitoire(s) destinées au stockage des instructions qui sont exécutables par un ou plusieurs dispositifs de traitement pour entraîner la réalisation d'un procédé selon l'une quelconque des revendications 1 à 9.
